# NEUE EUROPÄISCHE PATENTSCHRIFT

(11) **EP 1 321 024 B2**
(45) Veröffentlichungstag und Bekanntmachung des Hinweises auf die Entscheidung über den Einspruch: **02.05.2012**
(45) Hinweis auf die Patenterteilung: 02.05.2007
(21) Anmeldenummer: 02027236.5
(22) Anmeldetag: 06.12.2002
(51) Int. Cl.: A01D 41/127

(54) **Verfahren und Vorrichtung zur Optimierung des Betriebs eines landwirtschaftlichen Fahrzeugs**
Method and device for optimising the operation of an agricultural vehicle
Procédé et dispositif d'optimisation du fonctionnement d'un véhicule agricole

(30) Priorität: 18.12.2001 DE 10162357
(43) Veröffentlichungstag der Anmeldung: 25.06.2003
(73) Patentinhaber: CLAAS Selbstfahrende Erntemaschinen GmbH, 33428 Harsewinkel (DE)
(72) Erfinder: Behnke, Willi, 33808 Steinhagen (DE)

(56) Entgegenhaltungen:
- EP-A- 0 339 141
- EP-A- 0 586 999
- EP-A- 0 928 554
- DD-A- 289 686
- DE-A- 19 922 436
- DE-A1- 19 921 466
- GB-A- 1 450 956
- GB-A- 2 057 837
- US-A- 4 527 241
- BOTTINGER S: "NEUE INFORMATIONS- UND REGELSYSTEME AM MAHDRESCHER" LANDTECHNIK, VERLAG EDUARD F.BECKMANN KG. LEHRTE, HANNOVER, DE, Bd. 44, Nr. 6, 1. Juni 1989 (1989-06-01), Seiten 212-214, XP000026092 ISSN: 0023-8082
- Fechner W., Uebe N.,: "Kostenmodell für die Wahl der Fahrgeschwindigkeit beim Mähdrusch unter Einbeziehung der Körnerverluste." VDI/MEG-Kolloquium Agratechnik, Berlin (1993) H. 16, S.190-195

## Beschreibung

Diese Erfindung betrifft ein Verfahren und eine Vorrichtung zur Optimierung des Betriebs eines landwirtschaftlichen Fahrzeugs, wie beispielsweise Mähdrescher oder Feldhäcksler oder Traktor, mit wenigstens einer Einrichtungen zur Erfassung von Betriebswerten und/ oder Arbeitsergebnissen und wenigstens einer Rechen-, Speicherund Anzeigeeinrichtung.

An landwirtschaftlichen Fahrzeugen, insbesondere selbstfahrenden landwirtschaftlichen Fahrzeugen ist es bekannt, durch Einrichtungen, wie Taster, Dreh- und Stellelemente sowie Sensoren, Betriebswerte, Erntebedingungen und/oder Einstellwerte vorzugeben oder zu erfassen. Mittels Anzeige-, Speicher- und Recheneinrichtung, können diese Werte auch in Verbindung mit weiteren abgespeicherten Fahrzeugparametern oder Einstellungen, in Informationen über den momentanen Arbeitsbetrieb für den Maschinenbediener aufbereitet und angezeigt werden.
An Mähdreschern sind Einrichtungen bekannt, die eine Auswahl von Einstellparametern für den Arbeitsbetrieb in Abhängigkeit einer Erntegutart ermöglichen. Hierzu wählt der Bediener eines Mähdreschers über ein Bedienterminal eine Erntegutart aus, ruft für diese eine oder mehrere Einstellparameter für die einzelnen Arbeitsaggregate des Mähdreschers, wie Dreschspaltweite, Dreschtrommeldrehzahl oder Sieböffnungsweite, aus einer Speichereinrichtung ab und veranlasst dann die direkte automatische Einstellung dieser Einstellwerte an den entsprechenden Arbeitsaggregaten. Durch entsprechende Anzeigen auf einem Bedienterminal, wird der Bediener des Mähdreschers laufend über die Arbeitsergebnisse, wie die Fahrgeschwindigkeit, den Ernteertrag, die Ernteverluste und weitere Parameter des Ernteprozesses und des Mähdreschers informiert. Die in der Speichereinrichtung hinterlegten Einstellparameter stellen Grundeinstellungen für eine Erntegutart dar und liefern in der Regel ein erstes, brauchbares Arbeitsergebnis. Da sich jedoch die Erntebedingungen von Jahr zu Jahr oder während des Erntebetriebs oftmals ändern, wie zum Beispiel anhand der Erntegutsorte, Erntegutfeuchte oder dem Reifegrad, ist in vielen Fällen eine nachhaltige Verbesserungen der Einstellung notwendig. Diese wird dann je nach Qualifizierung des Bedieners von diesem empirisch vorgenommen.
Aus dem Stand der Technik sind verschiedene Einrichtungen auf einem Mähdrescher bekannt geworden, die automatisch eine Einstellung eines Arbeitsaggregates oder der Fahrgeschwindigkeit in Abhängigkeit wenigstens eines Arbeitsergebnisses erzeugen oder sogar regeln. Beispielsweise sei hier auf die DE 197 05 841 A1 verwiesen. Diese bekannten Einrichtungen an Mähdreschern erbringen lediglich die Möglichkeit, möglichst schnell eine brauchbare Maschineneinstellung zu finden oder diese durch eine Regelung selbsttätig führen zu lassen. Ernteziele müssen daher von dem Bediener des Mähdreschers selbst beachtet und bei der entsprechenden Auswahl und Einstellung des Mähdreschers berücksichtigt werden. Dieser Mangel wird durch eine Einrichtung, die in der DE 198 00 238 C1 offenbart ist, behoben. Dort werden Einstellparametern für eine Mähdreschereinstellung unter Berücksichtigung von verschiedenen Konstellationen von äußeren Erntebedingungen und einer Zielvorgabe in einer Speichereinrichtung auf einem Mähdrescher hinterlegt und zur Einstellung des Mähdreschers im Erntebetrieb auswählbar bereit gehalten. Nachteilig an dieser Lösung ist jedoch die von dem subjektiven empfinden des Bedieners abhängige Auswahl der äußeren Erntebedingungen sowie der Zielvorgabe und die notwendige vorherige Ermittlung und Hinterlegung von Einstellparametern, zu sämtlichen im Betrieb des Mähdreschers vorkommenden Konstellationen von Erntebedingungen und deren Auswertung im Hinblick auf die verschiedenen Zielvorgaben. Eine Aussage inwieweit der Mähdrescher dann die Zielvorgabe erfüllt und diese Zielvorgabe ferner in den gesamten Erntebetrieb passt, kann nicht gemacht werden.
In der DD 289 686 A5 wird ein Verfahren zum Ausgleich von Meßdifferenzen an Bordsystemen an einem Mähdrescher vorgeschlagen. Durch diesen Ausgleich können Unregelmäßigkeiten der Arbeitsergebnisse des Mähdreschers zwischen der Dichte, der Feucht und der Verluste ausgeglichen und ein Grundwert für die Trennaktivität des Mähdreschers von einem Bordcomputer bestimmt werden. Das Verhältnis der konkreten Verlustwerte zu diesem Trennaktivitätswert, gibt einen ökonomischen Leistungswert an, durch welchen die Gesamterntesituation des Mähdreschers in Verbindung eines zuvor bestimmten optimalen Leistungswertes beurteilt werden kann. Der optimale Leistungswert wird von einem Personalcomputer anhand von Erntezielen und Erntewerten bestimmt und auf den Bordcomputer des Mähdreschers übertragen. Durch diese vorgeschlagene Lösung, wird dem Bediener des Mähdreschers eine Maschinenanzeige zu Verfügung gestellt, anhand welcher er seine momentane Maschinenleistung im Verhältnis zu der vorgeschlagenen Ernteleistung, im Hinblick auf die Gesamternteeinbringung beurteilen kann. Diese Lösung bedingt eine Vielzahl von Sensoren sowie unterschiedliche Sensoren entlang des gesamten Durchlaufweges von Erntegut durch den Mähdrescher und ist daher aufwendig und mit hohen Kosten verbunden. Ferner erbringt dieser vorgeschlagene Ausgleich von Messwertdifferenzen die Möglichkeit, einen Vergleich des aktuellen Erntebetriebs in Verbindung einer fixen Vorgabe durchführen zu können. Diese Vorgabe kann zwar unter ökonomischen Betrachtungen lokal auf einem Computer generiert werden, ist aber als solche für den Bediener nicht nachvollziehbar. Der Vergleichswert erscheint dem Bediener lediglich als ein Sollwert für den Betrieb des Mähdreschers und beinhaltet speziell ein Verhältnis der Durchsatzleistung zu den Verlusten. Für den Bediener stellt diese Vorgabe keine nachvollziehbare ökonomische Betrachtungsweise des momentanen Erntebetriebs dar.

Es ist daher Aufgabe der Erfindung, auf einem landwirtschaftlichen Fahrzeug eine Möglichkeit zu schaffen, die dem Bediener des Fahrzeugs während dem Arbeitsbetrieb zumindest eine Information darüber gibt, inwieweit das Fahrzeug ökonomisch arbeitet.

Die Aufgabe wird durch ein Verfahren
gemäß des Anspruches 1 gelöst. Aus dem Erntegutdurchsatz und dem Erntegutverlust in Verbindung mit den Erntekosten und dem Ernteguterlös sowie wenigstens einer Betriebskennlinie, wird ein ökonomischer Erntegutverlustpunkt berechnet. Vorteilhaft lässt sich hierdurch aus der momentanen Erntekosten- und Erlössituation ein ökonomischer optimaler Erntegutverlustpunkt bestimmen. Dieser zeigt dem Bediener des Mähdreschers einen ökonomischen Betriebspunkt für genau diese Erntesituation an. Änderungen in der Markt- und/oder Kostenssituation werden hierdurch schon während des Betriebs des Mähdreschers berücksichtigt.
Dieses Verfahren generiert aus den im Betrieb des Fahrzeugs herrschenden Parametern, wenigstens einen Betriebswert auf einer Anzeige, der ständig von dem Bediener des Fahrzeugs eingesehen werden kann und vorteilhaft somit jederzeit Aufschluss über die aktuelle ökonomische Betriebsweise seines Fahrzeugs gibt. Der Betriebswert wird vorteilhaft in der Recheneinrichtung auf dem Fahrzeug selbst generiert und ist daher nicht von externen Einrichtungen und externen Datenübertagungsstrecken abhängig. Die von dem erfindungsgemäßen Verfahren generierten Betriebswerte lassen sich vorteilhaft auch in einer weiteren Einrichtung des Fahrzeugs weiter verwenden, indem diese Einrichtungen vorteilhaft die generierte Größe oder die generierten Größen berücksichtigt. Diese Betriebswerte können in weiteren Einrichtungen, vorteilhaft als Sollgrößen für eine Steuerung oder Regelung von weiteren Betriebswerten des Fahrzeugs verwendet werden.

Vorteilhaft besteht nun für den Fahrzeugbediener die Möglichkeit einen Vergleich zwischen dem Betriebswert und dem Betriebspunkt durchführen und gegebenenfalls seine Betriebsbedingungen so ändern zu können, dass der ökonomische Betriebspunkt durch abgeleitete veränderte Betriebsbedingungen erreicht werden kann. Dieser optimierte Wert kann vorteilhaft als Sollwert zur Optimierung des Betriebs des Fahrzeugs auf einer Anzeigeeinrichtung dem Bediener angezeigt und/oder direkt in einer weiteren Einrichtung auf dem Fahrzeug, zur Regelung und/oder Steuerung des zu Grunde liegenden Betriebswertes und/oder Arbeitspunktes herangezogen werden.

In einer Ausgestaltung der Erfindung wird ein ökonomischer Betriebswert von einer auf einer als Computer ausgebildeten Recheneinrichtung laufenden Optimierungssoftware generiert. Eine Optimierungssoftware auf einem Computer erbringt für den Bediener des Fahrzeugs vorteilhaft eine bekannte Software- Bedienungsmöglichkeit sowie die Verwendung einer fahrzeugunabhängigen Optimierungssoftware, mit bekannter Leistungsfähigkeit. Femer werden die auf den landwirtschaftlichen Fahrzeugen eingesetzten Recheneinrichtungen, die hierfür mit speziell geeigneten Prozessoren ausgestattet zur Steuerung und Regelung der Arbeitsabläufe dienen, nicht zusätzlich mit Programmen und Programmlaufzeiten belastet.

In einer Weiterbildung der Erfindung, wird bei der Berechung zusätzlich wenigstens ein Arbeitsergebnis berücksichtigt. Durch die Einbeziehung eines Arbeitsergebnisses, lässt sich die Optimierung des wenigstens einen ökonomischen Betriebswertes weiter verbessern. So stehen die im Arbeitsbetrieb herrschenden Betriebswerte und/oder Erntebedingungen des Fahrzeugs auch im Zusammenhang mit den Arbeitsergebnissen und werden von diesen beeinflusst. Theoretische, von der Optimierungssoftware abgeleitetet Arbeitsergebnisse können hierdurch auf die tatsächlichen Werte abgeglichen werden und vorteilhaft korrigiert in eine Optimierung einfliesen. Beispielsweise kann hiermit die in der Recheneinrichtung aktivierte Durchsatz-/ Verlustkennlinien ständig an den aktuellen Durchsatz/Verlustwert angepasst und/oder eine den aktuellen Werten entsprechenden Kennlinie ausgewählt werden.

Erfindungsgemäß ist der Parameter ein Betriebswert, welcher fixe und/oder variable Fahrzeugkosten und/oder Arbeitskraftkosten und/oder den Ernteguterlös und/oder Ernte- oder Erntegutnachbearbeitungskosten und/oder wenigstens eine Betriebskennlinie und/oder Ernteanforderungen beinhaltet. Hierdurch wird eine Bewertung und Optimierung des Betriebes des Fahrzeugs anhand des gesamten Kostenumfeldes des Fahrzeugs, auch in Bezug auf das Gesamtergebnis des Agrarbetriebes möglich. Während des Betriebes des Fahrzeugs, werden vorteilhaft jederzeit die im Betrieb herrschenden Bedingungen und/oder Arbeitsergebnisse anhand der Kosten und/oder des Erlöses und/oder von Betriebskennlinien oder/und den Ernteanforderungen bewertet und ermöglicht somit eine direkte Ermittlung von Betriebswerten, anhand ökonomischer Betrachtungen und Gesichtspunkten.

In einer weiteren Ausgestaltung der Erfindung, ist der Parameter ein Arbeitsparameter, welcher wenigstens einen Einstellwert eines Fahrzeugs und/oder die Arbeitsbreite und/oder die Fahrgeschwindigkeit und/oder wenigstens ein Verbrauchs- und/oder Verschleiß- und/oder Leistungs- und/oder Drehmoment- und/oder Drehzahlwert wenigstens eines Fahrzeugsaggregates beinhaltet. Vorteilhaft werden hierdurch, die von den Bedienern des Fahrzeugs durchgeführten, manuellen oder auch durch Steuer- und Regeleinrichtungen vorgegeben Einstellungen an dem Fahrzeug und die sich an den Arbeitsaggregaten einstellenden Betriebswerte erfindungsgemäß berücksichtigt und verwertet. Auch die Beachtung von Verschleißwerten, beispielsweise an Reifen, Messern, Ketten oder Arbeitswerkzeugen allgemein, lassen vorteilhaft einen Bewertung in einer ökonomischen Betrachtung und Bewertung sowie Rückschlüsse auf die Arbeitsweise des Fahrzeugs zu und können dann erfindungsgemäß berücksichtigt werden.

In einer weiteren Ausgestaltung der Erfindung, ist der Parameter eine Erntebedingung, welche die Erntegutart und/oder die Erntgutfeuchte und/oder die Strohfeuchte und/oder die Umgebungsluftfeuchte und/oder die Tageszeit und/oder der Reifegrad und/oder die geografische Lage beinhaltet. Die Bedingungen können vorteilhaft direkt aus den elektronischen Bordsystemen an den Fahrzeugen entnommen oder auch manuell eingeben werden. Es ergibt sich vorteilhaft eine genauere erfindungsgemäße ökonomische Ermittlung von Punkten und/oder Parametern, insbesondere bei der Ermittlung der aktuellen Betriebskosten des Fahrzeuges.

In einer weiteren Ausgestaltung der Erfindung, ist das Arbeitsergebnis, der Gutdurchsatz und/oder der Erntegutdurchsatz und/oder die Erntegutabscheidung im Mähdrescher und/oder der Emtegutverlust und/oder die Erntegutstruktur und/oder die Erntegutsauberkeit und/oder der Ertrag. Hierdurch lassen sich vorteilhaft Rückschlüsse auf die momentane Arbeitserledigung des Fahrzeugs und die anfallenden Kosten schließen und insbesondere eine Abschätzung und Ermittlung von Fahrzeug- und/oder Folgekosten durchführen. Weiterhin lässt sich aus wenigstens einem Arbeitsergebnis, der zu erwartende Erlös aus der anschließenden Vermarktung des Erntegutes oder die zu erwartenden Einkünfte durch die Arbeitserledigung ermitteln. Eine weitere Verbesserung der ökonomischen Betrachtung des Fahrzeugeinsatzes ist hierdurch vorteilhaft schon auf dem Fahrzeug möglich und kann ferner dann schon während der Erledigung der Arbeit berücksichtigt und in einer entsprechende Auswertung und/oder Beeinflussung des Arbeitsbetriebes berücksichtigt werden.

In einer besonderen Ausgestaltung der Erfindung, wird als der ökonomische Betriebswert, ein ökonomischer Erntegutdurchsatz und/oder wenigstens ein Erntegutverlust und/oder eine ökonomische Flächenleistung berechnet. Vorteilhaft stellen die genannten Betriebswerte, für den Bediener der Erntemaschine, bekannte Kenngrößen für den Betrieb des Fahrzeugs dar, sodass er es erfahrungsgemäß leicht versteht, anhand des angezeigten ökonomischen Betriebswerte, das Fahrzeug zur Erzielung einer Verbesserung des Arbeitsbetriebes anhand der ökonomischen Anzeige manuell einstellen zu können. Vorteilhaft wird der ermittelte Betriebswert optimiert und als ökonomischer Betriebspunkt angezeigt, wodurch der Bediener des Fahrzeugs eine Hilfestellung zur Findung des besten Betriebswertes erhält. Der Bediener braucht dann nur den aktuellen angezeigten ökonomischen Betriebswert mit dem aktuellen ökonomischen Betriebspunkt zu vergleichen und erhält aus der Differenz, eine Information darüber, welcher Betriebswert zur Erzielung des optimalen ökonomischen Betriebswertes gewählt werden sollte. Auch sind auf den Fahrzeugen, Sensor- und Anzeigeeinrichtungen für diese Größen bekannt und vorhanden, sodass vorteilhaft ein Einsatz zusätzlicher Sensoren und Anzeigemitteln nicht notwendig wird.

Eine weitere Lösung der erfindungsgemäßen Aufgabe, wird durch eine Optimierungseinrichtung gemäß des Anspruches 10 gelöst. Die Integration einer Optimierungseinrichtung direkt auf einem Fahrzeug erbringt den Vorteil, dass direkt auf dem Fahrzeug in Verbindung mit dem laufenden Betrieb, eine Optimierung des Betriebs durchgeführt werden kann. Die Optimierung kann dabei direkt anhand von den im Betrieb vorkommenden Einstellungen und Werten durchgeführt werden. Vorteilhaft entfällt ein Datenaustausch zu weiteren Einrichtungen außerhalb des Fahrzeugs. Des weiteren wird der Bediener des Fahrzeugs selbst mit der Optimierungseinrichtung in Verbindung gebracht, wodurch der Bedienern vorteilhaft, beispielsweise durch die Eingabe von Betriebswerte oder Erntebedingungen sowie durch die Anzeige der ermittelten Betriebswerte, auf die ökonomisch bedeutsamen Größen hingewiesen und damit vertraut gemacht wird. Er wird direkt in den Optimierungsprozess mit einbezogen und kann selbst durch Versuche, Einstellungen an dem Fahrzeug durchführen, um die Einflüsse auf den ökonomischen Betriebswert und Arbeitsparameter empirisch zu ermitteln und erhält hierdurch vorteilhaft eine Gefühl für ökonomisch wichtige Einflüsse im Arbeitsbetrieb.

In einer weiteren Ausgestaltung der Erfindung, wird die Recheneinrichtung von einem Computer gebildet, der mit dem Fahrzeug über wenigstens eine Schnittstelle Daten austauscht. Die in den Fahrzeugen eingesetzten Recheneinrichtungen sind in der Regel für die Steuerung und Regelung von Prozessen in dem Fahrzeug ausgelegt und besitzen hierfür geeignete Prozessoren sowie benötigen hierfür spezielle Programmierungen. Durch den Einsatz eines Computers, der mit Standartkomponenten ausgestattet ist, wird eine kostengünstige Lösung mit einer weit höheren Leistungsfähigkeit gegenüber den fahrzeugeigenen Recheneinrichtungen geschaffen. Die Integration eines Computers auf dem Fahrzeug erbringt ferner den Vorteil, dass vorhandene leistungsfähige Optimierungsprogramme direkt auf dem Fahrzeug eingesetzt werden können und der Computer dann über lediglich wenigstens eine vorhandene bekannte Schnittstelle mit dem Fahrzeug Daten austauschen kann.

Ein ökonomischer Wert zeigt generell die Beziehung zwischen den Aufwendungen und der daraus resultierenden Leistung an. In der vorliegenden Erfindung werden Fahrzeuge landwirtschaftlich eingesetzt und erbringen dabei eine für den Agrarbetrieb wertvolle Arbeitsleistung. Im Vorfeld ist es, beispielsweise von einem Betriebsleiter, immer zu entscheiden, ob eine ausstehenden Arbeit intern oder extern erledigt werden sollte. Diese Entscheidung wird in der Regel anhand einer Dringlichkeit und den zur Verfügung stehenden Möglichkeiten und Mitteln sowie anhand einer Kosten/Nutzen-Betrachtung entschieden. Für den danach erfolgenden Einsatz eines Fahrzeugs, ist es dann notwendig, dass das Fahrzeug mit der entsprechenden Ausrüstung, innerhalb der zuvor angenommenen Aufwendung, die erforderliche Arbeit erledigt. Hier setzt nun die Erfindung an, indem auf dem Fahrzeug erfindungsgemäß eine Einrichtung installiert wird, die dem Bediener des Fahrzeugs die Beurteilung der momentanen Arbeitserledigung anhand eines ökonomischen Betriebswertes ermöglicht. Durch diese Einrichtung wird ferner eine empirische oder automatische Optimierung des Betriebes, anhand der optimierten ökonomischen Betriebswerte, ermöglicht. Hier zeigt sich auch, dass der Einsatz der Erfindung an jedem beliebigen landwirtschaftlich Fahrzeug, eine Verbesserung des jeweiligen Betriebs des Fahrzeugs und insbesondere in Bezug auf die ökonomische Situation des Agrarbetriebs erbringen kann.

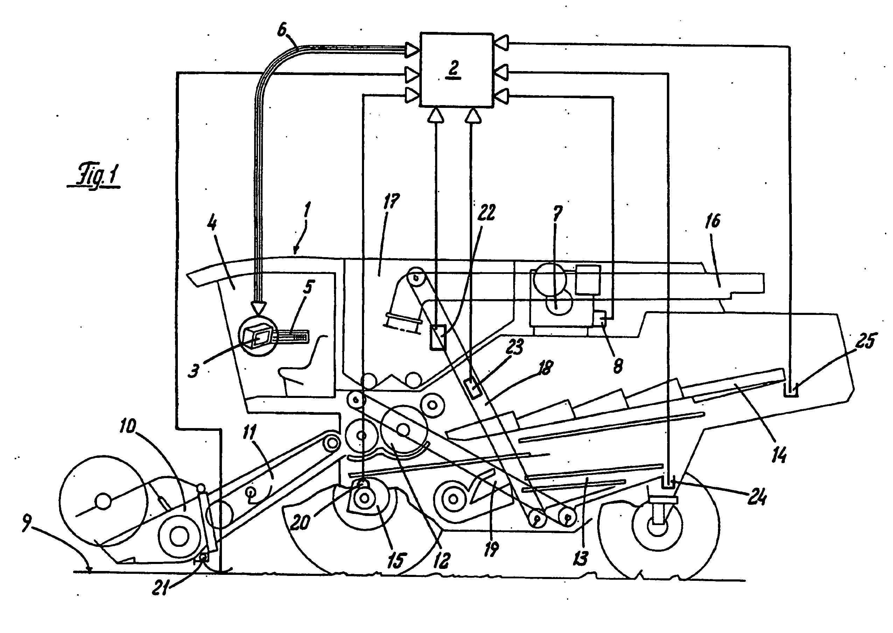

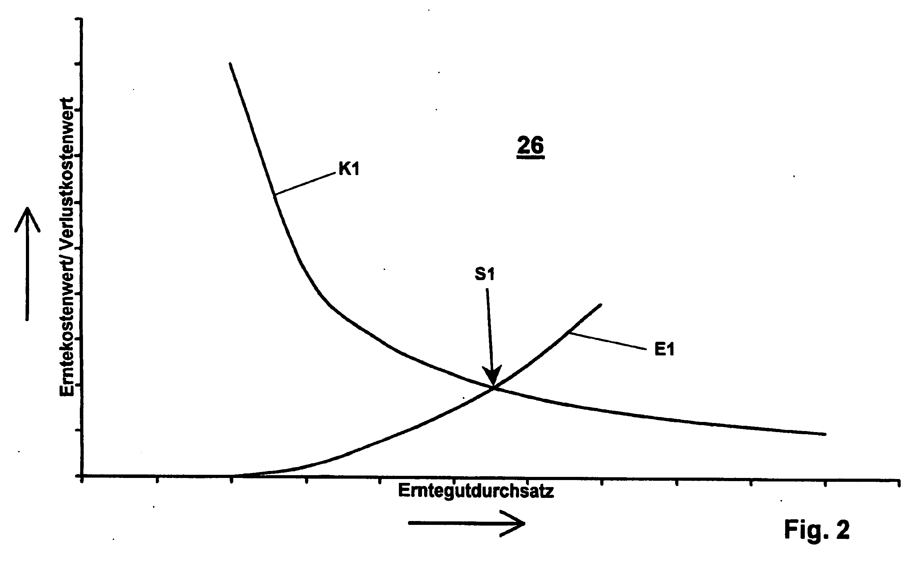

Anhand eines Ausführungsbeispiels an einem Mähdrescher, soll die Erfindung näher erläutert werden. Es zeigen die Figur 1 eine Seitenansicht eines Mähdreschers mit integrierter Recheneinrichtung und Figur 2 zwei Kurven anhand weicher eine Optimierung durchgeführt wird.

In der Figur 1 wird, beispielhaft für ein selbstfahrendes landwirtschaftliches Fahrzeug, eine schematisierte Seitenansicht eines an sich bekannten Mähdreschers 1 gezeigt. Aufgabe eines Mähdreschers 1 ist es, auf Halmen wachsendes Erntegut, wie Getreide, von einer Bearbeitungsfläche 9 aufzunehmen und von dem Stroh und weiteren Beimengungen zu trennen. Zur Aufnahmen des Erntegutes ist in der Figur 1 an einem Mähderscher 1 beispielsweise angebrachtes Schneidwerk 10 dargestellt. Dieses schneidet die Ernteguthalme mit dem in den Ähren befindlichen Erntegut vom Bearbeitungsfeld 9 ab und führt es anschließend auf die Breite des Einzugskanals 11 zusammen. In dem Einzugskanal 11 befinden sich umlaufende Einzugsketten mit Querstegen, die das zusammengeführte, abgeschnittene Erntegut der nachgeordneten Drescheinrichtung 12 zuführen. In der Drescheinrichtung 12 wird durch die schlagende und reibende Wirkung der Vorbeschleunigertrommel und der Dreschtrommel, das Erntegut aus den Ähren gelöst und vom Stroh getrennt. Danach gelangt das Erntegut durch den hierfür durchlässigen Dreschkorb auf den Vorbereitungsboden. Das von der Dreschtrommel abgegebene Stroh, wird durch die Wendetrommel abgebremst und auf mehrere über die Arbeitsbreite nebeneinander angeordnete Schüttler 14 übergeben. Die Schwingbewegung der Schüttler 14 sowie deren stufenförmigen Ausbildung bewirken eine Förderung des Strohs zum hinteren Ende des Mähdreschers 1 hin sowie eine Abscheidung des noch im Stroh befindlichen Erntegutes. Diese Restmenge wird durch den Rücklaufboden und einer Schwingbewegung des selben ebenfalls auf den Vorbereitungsboden übergeben. Das auf dem Vorbereitungsboden befindliche Erntegut mit den weiteren Beimengungen, wie Kurzstroh, Spreu und Ährenteile, wird durch eine Schwingbewegung des selben und dessen stufenförmigen Ausbildung separiert und der nachfolgenden Reinigungseinrichtung 13 zugeführt. Diese Reinigungseinrichtung 13 wird von einem Reinigungsgebläse und von den Sieben gebildet. Das von den Schüttlern 14 und der Drescheinrichtung 12 abgeschiedene Erntegut, wird über eine von dem Reinigungsgebläse belüftetet Fallstufe auf das Obersieb übergeben. Dieses sowie das darunter befindliche Untersieb sind in der Regel Lamellensiebe mit jeweils separat einstellbaren Öffnungsweiten, wobei das Obersieb im hinteren Bereich mit einer von der restlichen Öffnungsweite des Obersiebs unterschiedlichen Öffnungsweite eingestellt werden kann. Das Unter- sowie das Obersieb werden von einem von dem Reinigungsgebläse erzeugten Luftstrom durchsetzt. Die Schwingbewegung der Siebe sowie der Luftstrom bewirken eine Reinigung und eine Förderung des Erntegutes sowie deren Beimengungen zum hinteren Ende des Mähdreschers 1 hin. Durch die Fallstufe werden große und leichte Beimengungen von dem Luftstrom, bevor sie das Obersieb erreichen, erfasst und aus dem Mähdrescher 1 abgeschieden. Kleinere und schwerere Erntegutbestandteile gelangen über die Fallstufe direkt auf das Obersieb. Je nach Einstellung der Obersiebweite, fallen die einzelnen Erntegutkörner und weitere Bestandteile des Erntegutes durch dieses hindurch und gelangen so auf das Untersieb. Kurzstrohteile und nicht ausgedroschene Ähren werden über den vorderen Obersiebbereich hinweg bewegt und fallen, je nach Öffnungsweite und Größe, im hinteren Bereich des Obersiebes durch das Obersieb direkt in die sogenannte Überkehr. Das Untersieb besitzt in der Regel eine feinere Sieblamellenstruktur als das Obersieb und wird normalerweise mit einer geringeren Öffnungsweite als das Obersieb betrieben. Größere und leichte Erntegutbestandteile, wie Erntegutkörner mit Spelz, Ährenteile oder Halmteile werden, sofern sie durch das Obersieb auf das Untersieb gelangt sind, durch die Schwingbewegung und den Luftstrom in die sogenannte Überkehr übergeben. Das gereinigte Erntegut selbst fällt direkt durch das Untersieb hindurch und wird mittels einer Zuführschnecke und dem Kornelevator 18 in den Korntank 17 gefördert. Eine Entleerung des Korntanks 17 erfolgt mittels des Korntankentleerrohres 16. Das in die Überkehr gelangte Erntegut, wird mittels einer Zuführschnecke und dem Überkehrelevator 19 in die Drescheinrichtung 12 zurückgefördert und so erneut dem Dreschprozess zugeführt.

Der in der Figur 1 dargestellte Mähdrescher 1, ist mit einer Fahrerkabine 4 ausgestattet. In dieser ist eine Anzeigeeinrichtung 3 und eine damit in Verbindung stehende Bedieneinrichtung 5 angeordnet. Ferner sind dort nicht näher dargestellte, dem Fachmann jedoch bekannte Einrichtung zur Vorgabe der Fahrtrichtung und Fahrgeschwindigkeit des Mähdreschers 1 vorhanden, die auf den Fahrantrieb 15 des Mähdreschers 1 entsprechend einwirken. Die Anzeigeeinrichtung 3 und die Bedieneinrichtung 5 stehen mit in dem Mähdrescher 1 an verschiedenen Orten angeordneten einzelnen Sensoren und Aktoren in Verbindung, die zur ferngesteuerten Einstellung und zur Erfassung von Einstellungen verteilt in der Maschine angebracht und dem Fachmann prinzipiell bekannt sind. Der Bediener des Mähdreschers 1 erhält hierdurch die Möglichkeit, die Funktionsweise des Mähdreschers 1 einstellen und überwachen zu können. Erfindungsgemäß ist der Mähdrescher 1 mit einer Recheneinrichtung 2 ausgestattet, welche über eine Busverbindung 6 mit zumindest der Anzeigeeinrichtung 3 in Verbindung steht. Diese Recheneinrichtung 2 beinhaltet eine nicht dargestellte Speichereinrichtung, in welcher über die Bedieneinrichtung 5 eingegebene Werte, wie Betriebswerte, Arbeitsparameter oder Erntebedingungen abgespeichert und ferner auch allgemeine Fahrzeugparameter fest gespeichert sein können. Erfindungsgemäß kann diese Recheneinrichtung 2 auch ein Computer, beispielsweise eine mobiler Computer mit einer eigenen Anzeige- und Speichereinrichtung sowie mit wenigstens einer Schnittstelle zum Bussystem 6 des Mähdreschers 1, sein. Es sind unterschiedliche Kombinationen der Anzeigeeinrichtung 3 mit der Recheneinrichtung 2 und der Bedieneinrichtung 5 sowie eines Computers möglich. Je nach Ausstattung der Fahrzeuge, auf welchen das erfindungsgemäße Verfahren und die Vorrichtung eingesetzt wird, liegt es im ermessen des Fachmanns eine entsprechende vorteilhafte bekannte Kombination zu wählen.
Auf der Recheneinrichtung 2 ist erfindungsgemäß ein Programm implementiert, welches einen ökonomischen Betriebswert für den Mähdrescher 1 generiert und dann auf der Anzeigeeinrichtung 3 anzeigt. Alternativ kann eine Anzeige entfallen und die ermittelten Werte direkt von einer weiteren Einrichtung auf dem Mähdrescher 1 verwendet werden. Erfindungsgemäß sind mit der Recheneinrichtung 2 direkt oder über das Fahrzeugbussystem 6, verschiedene, dem Fachmann an sich bekannte Sensoren, zur Erfassung von Betriebswerten, Arbeitsparametern und Arbeitsergebnissen, verbunden. Beispielhaft sind in der Figur 1 einige Sensoren schematisch eingezeichnet. An dem Schneidwerk 10 ist wenigstens ein Schnitthöhensensor 21 angeordnet, welcher der Ermittlung des tatsächlichen Abstandes zwischen dem Schneidwerk 10 und der Bearbeitungsfläche 9 dient. Der gemessene Abstand wird der Recheneinrichtung 2 zugeführt. In der Reinigungseinrichtung 13 können mehrerer Sensoren zur Ermittlung der Einstellung und Abscheidung von Erntegut angeordnet werden. Dargestellt ist ein am Ende der Reinigungseinrichtung 13 angeordneter Verlustsensor 24, welcher mit der Recheneinrichtung 2 in Verbindung steht. Hiermit lassen sich anteilig die Erntegutkörner erfassen, die über die Reinigungseinrichtung 13 hinweg den Mähdrescher 1 verlassen und als Verluste verloren gehen. Derartige Sensoren 24 sind dem Fachmann bekannt und erstrecken sich teilweise oder komplett über die Arbeitsbreite der Einrichtungen 12,13,14 in dem Mähdrescher 1. Auch am Ende oder direkt hinter den Schüttlern 14 kann ein Verlustsensor 25 eingesetzt werden. Dieser liefert dann der Recheneinrichtung 2 eine Aussage über die noch am Ende des Schüttlers 9 aus dem Mähdrescher 1 verlustiggehenden Erntegutkörner. Auch zur Beurteilung der Erntegutkörnermenge in der Überkehr, lassen sich in der Überkehr dem Fachmann bekannte Sensoren, beispielsweise am Ende des Untersiebes oder an der Stelle der Rückführung der Überkehr in den Dreschprozess, anordnen. Ferner können an dem Überkehrelevator 19 weitere Sensoren zur Erfassung der Überkehrmenge und beispielsweise auch des Kornbruchs angebracht sein. Die jeweils erfassten Werte, werden der Recheneinrichtung 2 erfindungsgemäß zuführen.
Weitere Informationen über den momentanen Betrieb des Mähdreschers 1, bekommt die Recheneinrichtung 2 von den am Kornelevator 18 angebrachten Sensoren 22,23.

Ein Ertragssensor 22 ermittelt die Fördermenge an Erntegut im Kornelevator 18. Die Erntegutfeuchte oder auch die Kornfeucht wird durch den Feuchtesensor 23 ermittelt und an die Recheneinrichtung 2 gemeldet. Weitere Sensoren zur Beurteilung von Eigenschaften des Erntegutes, sind dem Fachmann bekannt und können in dem Mähdrescher 1 angeordnet und mit der Recheneinrichtung 2 bei Bedarf erfindungsgemäß in Verbindung stehen.
Der Antriebsmotor 7 des Mähdreschers 1 ist mit einer Steuerelektronik 8 ausgestattet und stellt der Recheneinrichtung 2, beispielsweise über eine Busverbindung, den aktuellen Kraftstoffverbrauch des Mähdreschers 1, das aktuelle Abtriebsmoment und somit die Belastung des Mähdreschers 1 und beispielsweise auch Wartungssignale zur Verfügung. Die jeweiligen Aktoren zur Einstellung des Mähdreschers 1 sind dem Fachmann ausreichend bekannt, so dass in dieser Figur 1 auf die Darstellung des jeweiligen Elementes verzichtet werden kann.

Von der Recheneinrichtung 2 wird erfindungsgemäß ein ökonomischer Betriebswert berechnet. Dieser ökonomische Wert wird auf einer Anzeigeeinrichtung 5, dem Bediener des Mähdreschers 1 angezeigt, dabei kann der Wert ein absoluter oder relativer Wert sein, der dann beispielsweise auf einem Zeigerinstrument relativ zu einem Endanschlag oder zu einem unterlegten rot/grün- Bereich oder auch als absoluter Wert auf dem Monitor angezeigt wird. Der ökonomische Betriebswert ist beispielsweise ein berechnete ökonomische Flächenleistung. Diese Leistung kann erfindungsgemäß aus dem Kraftstoffverbrauch, der aktuellen Fahrgeschwindigkeit und der Schnittbreite des Schneidwerks 10 berechnet werden. Die aktuelle Fahrgeschwindigkeit und die aktuelle Schnittbreite geben die Flächenleistung bezüglich der Arbeitszeit an. Das erfindungsgemäße Verfahren setzt diese Flächenleistung ins Verhältnis zum aktuellen Kraftstoffverbrauch und zeigt dem Bediener des Mähdreschers 1, als eine ökonomische Flächenleistung, die Flächenleistung bezogen auf den Kraftstoffverbrauch an. Wie sich nun eine Fahrgeschwindigkeitserhöhung auf die Veränderung die ökonomische Flächenleistung auswirkt, hängt von den aktuellen Zusammenhängen des Arbeitseinsatzes ab. Den optimalen Arbeitsbetrieb des Mähdreschers 1 hinsichtlich der Ökonomie, kann von dem Bediener des Mähdreschers 1, durch eine einfache Variation der Fahrgeschwindigkeit, selbst heraus gefunden werden.

Erfindungsgemäß kann der Arbeitsbetrieb anhand von beispielsweise einem Wert oder Faktor oder auch einer Kennlinie optimiert werden. Wie sich die Fahrgeschwindigkeit im Verhältnis zum Kraftstoffverbrauch an einem Mähdrescher 1 verhält, ist prinzipiell bekannt und kann als eine allgemeine mathematische Beziehung in Form einer Funktionsgleichung der Recheneinrichtung 2 zur Verfügung stehen. Ferner ist der Zusammenhang zwischen der Fahrgeschwindigkeit und der Flächenleistung allgemein bekannt und kann der Recheneinrichtung 2 als ein Faktor, eine Kennlinie oder eine weitere Funktionsgleichung zur Verrechnung vorliegen. Weiterhin ist es möglich, dass die allgemeinen, bekannten Zusammenhänge anhand der aktuellen Betriebswerte kalibriert werden, indem der Bediener des Mähdreschers 1 während eines Kalibiervorgangs, die aktuellen Betriebswerte der Recheneinrichtung 2, durch eine sogenanntes Lernen, übergibt. Die Recheneinrichtung 2 bestimmt dann automatisch, Faktoren oder Konstanten anhand der gelernten Betriebswerte und kalibriert dann die allgemeinen Funktionsgleichungen auf den aktuellen Arbeitsbetrieb. Dieser Kalibiervorgang kann weiterhin bis hin zu einer Kalibrierfahrt erweitert werden, in welcher dann Zusammenhänge zwischen Betriebswerten und Arbeitsparametern und Einstellwerten anhand einer oder mehrerer Konstellationen oder eines oder mehrerer Betriebspunkte gelernt und dann in der Speichereinrichtung abgespeichert werden. Beispielsweise werden der Erntegutdurchsatz, der Erntegutverlust und der Kraftstoffverbrauch bei unterschiedlichen Fahrgeschwindigkeiten gelernt und dann die erforderlichen Zusammenhänge generiert.
Anhand der aktuellen Betriebswerte, wie Kraftstoffverbrauch, Fahrgeschwindigkeit und Schnittbreite, kann die Recheneinrichtung 2, in Verbindung mit den bekannten Zusammenhängen, eine optimierte ökonomische Flächenleistung bestimmen und dem Bediener des Mähdreschers 1 an zeigen. Der Bediener des Mähdreschers 1, kann nun die angezeigte optimierte ökonomische Flächenleistung direkt, durch eine Veränderung der ihm bekannten Einstellmöglichkeiten des Mähdreschers 1, erfahrungsgemäß umsetzen und anhand der laufenden Anzeige des ökonomischen Betriebswertes kontrollieren. Die Möglichkeiten der automatischen Umsetzung beziehungsweise des automatischen Einflusses in eine Regelung von erfindungsgemäß vorgeschlagenen Betriebswerten, sind dem Fachmann ausreichend bekannt und liegen im Rahmen der Erfindung und werden von dieser erfasst.

In einer Speichereinrichtung auf dem Mähdrescher 1 werden erfindungsgemäß, mittels dem Fachmann bekannter Einrichtungen, wie über die Bedieneinrichtung 5, über eine bekannte Speicherkarte oder über bekannte Datenübertagungsstrecken, wie Funkverbindungen oder eine Internetanbindung, der mögliche Erlös aus dem Erntegutverkauf, die Maschinenkosten flächen- und/oder zeitbezogen, Wartungskosten, Arbeitskraftkosten sowie Betriebsmittelkosten und/oder ökonomische Vergleichswerte, wie beispielsweise die Kosten einer externen Arbeitserledigung, hinterlegt. Während dem Betrieb des Mähdreschers 1, können dann hieraus ökonomische Betriebsdaten, wie beispielsweise die aktuellen fixen und variablen Kosten bestimmt werden. Für eine ökonomische Betrachtung der Erntekosten, können diese in ein Verhältnis zu der aktuellen Flächenleistung und/oder dem Erntgutdurchsatz gesetzt und dem Bediener des Mähdreschers 1 angezeigt werden. Ferner lassen sich aus den einzelnen Betriebswerten des Mähdrescher 1 im Erntebetrieb, erfindungsgemäß anhand der bekannten Erntekosten und dem bekannten Erlös, weitere ökonomische Betriebswerte berechnen und zur Optimierung des Betriebs verwenden. In der Figur 2, ist ein erster Kurvenverlauf K1 gezeigt, der einen Erntekostenwert in Verbindung mit dem Erntegutdurchsatz angibt. Eine weitere Kurve E1 zeigt das Verhältnis zwischen einem Verlustkostenwert und dem Erntegutdurchsatz an. Der Schnittpunkt S12 der beiden Kurven K1 und E1, stellt ein Optimum für den aktuellen Betrieb des Mähdreschers 1 dar. An dieser Stelle S1 wird, bei einem bestimmten Erntgutdurchsatz, ein Optimum zwischen dem mit steigendem Erntegutdurchsatz ansteigenden Verlustkostenwert und dem fallenden Erntekostenwert erzielt.
Der Erntegutdurchsatz wird von der Flächenleistung des Mähdreschers 1 und dem Ertrag auf der Bearbeitungsfläche 9 bestimmt und hängt ferner von der Mähdreschereinstellung ab. Er bezieht sich in dem dargestellten Diagramm 26 auf den von einem Ertragssensor 22 ermittelten Kornertrag pro Erntestunde. Von dem Erntegutdurchsatz abhängig, ist auch der Erntegutverlust. Hieraus wird erfindungsgemäß der Verlustkostenwert in Verbindung mit dem Erlös des Erntegutes bestimmt. Der Zusammenhang zwischen dem Erntegutdurchsatz und dem Ernteverlust, kann aus in der Speichereinrichtung hinterlegten bekannten Kennlinien, abhängig von der Erntegutsorte, Erntegutart und der Erntegutfeuchte berechnet und/oder aus den Signalen der Sensoren 24,25 für den Ernteverlust im Mähdrescher 1 abgeleitet werden.
Der Erntekostenwert steht beispielhaft für Kosten, die durch den Betrieb entstehen und auf die Erntezeit bezogen fest anfallen. Maschinen-, Wartungs-, und Fahrerkosten stehen hier im Vordergrund. Die während dem Betrieb durch die Arbeit entstehenden Kosten, wie beispielsweise durch die Ernteverluste oder den Betriebsmittelverbrauch, werden durch den Verlustkostenwert angegeben. Die Optimierung zur Berechnung des erfindungsgemäßen ökonomischen Betriebswertes, zeigt ein Optimum zwischen der Erlös bringenden Mähdrescherleistung und den Erlös mindernden Kosten des momentanen Erntebetriebs an.
Durch die aktuellen Betriebswerte und Arbeitsergebnisse werden die optimalen Betriebsbedingungen hinsichtlich der Ökonomie des Arbeitseinsatzes ständig aktuell ermittelt, so wird beispielsweise das Hinzuschalten des Strohhäckslers anhand einer höheren Abtriebskraft am Motor oder eines höheren Kraftstoffverbrauchs erkannt und fließt direkt in den ökonomischen Betriebswert und gegebenenfalls in den Optimierungsprozess mit ein. Auch die Stoppelhöhe, kann von dem Signal des Schnitthöhensensor 21 erfindungsgemäß ausgewertet und anhand dieser Höhe beispielsweise Lagergetreide erkannt und dann zusätzliche Erntekosten bei dem Erntekostenwert berücksichtigt werden. Ferner bestimmen die Werte der ermittelten Erntgutfeuchte die Ernte- und die Erntgutfolgekosten und können erfindungsgemäß direkt im Erntebetrieb entsprechend ökonomisch bewertet werden.
Die genannten Ausführungsbeispiele lassen sich auch insbesondere auf selbstfahrende Feldhäcksler übertagen und dort erfindungsgemäß anwenden. Hierbei werden dann beispielsweise die Erntekosten in Verbindung mit dem Erntegutdurchsatz als ökonomischer Betriebswert angezeigt, ferner kann eine Anzeige des Erntegutdurchsatz in Verbindung mit der Flächenleistung und/oder dem Kraftstoffverbrauch erfindungsgemäß realisieren. Auch die genannten Optimierungen, anhand der Flächenleistung in bezug auf den Erntegutdurchsatz sowie in Bezug auf die variablen Erntekosten lassen sich hier anwenden und dienen erfindungsgemäß dem Bediener des Feldhäckslers zur Optimierung des Arbeitsbetriebes.

Die Erfindung beschränkt sich nicht nur auf die angegebenen Ausführungsbeispiele und dargestellten Einrichtungen, sondern erfasst jegliche Arten von landwirtschaftlichen Fahrzeugen und Arbeiten hiermit, insbesondere die, die eine bezifferbare Arbeitsleistung in Verbindung mit einer bekannten und ermittelbaren Kostensituation beitsleistung in Verbindung mit einer bekannten und ermittelbaren Kostensituation erbringen. Hier seien beispielsweise noch Traktoren und/oder Trägerfahrzeuge mit aufgesattelten und/oder angehängten Arbeitsgeräten, wie Mähwerken oder Bodenbearbeitungsgeräte genannt. Es liegt femer im Rahmen der Erfindung den aktuellen Arbeitsbetrieb in Verbindung mit einer möglichen Fremdvergabe und den damit verbundenen Kosten, während dem Arbeitsbetrieb zu vergleichen und das Ergebnis als ökonomischen Betriebswert dem Bediener an zuzeigen.

### Bezugszeichenliste:

- 1: Mähdrescher
- 2: Recheneinrichtung
- 3: Anzeigeeinrichtung
- 4: Fahrerkabine
- 5: Bedienereinrichtung
- 6: Busverbindung
- 7: Antriebsmotor
- 8: Steuerelektronik
- 9: Bearbeitungsfläche
- 10: Schneidwerk
- 11: Einzugskanal
- 12: Drescheinrichtung
- 13: Reinigungseinrichtung
- 14: Schüttler
- 15: Fahrantrieb
- 16: Korntankentleerungsrohr
- 17: Korntank
- 18: Kornelevator
- 19: Überkehrelevator
- 20: Fahrgeschwindigkeitssensor
- 21: Schnitthöhensensor
- 22: Ertragssensor
- 23: Feuchtesensor
- 24: Verlustsensor Siebe
- 25: Verlustsensor Schüttler
- 26: Diagramm

## Patentansprüche

1. Verfahren zur Optimierung des Betriebs eines selbstfahrenden landwirtschaftlichen Fahrzeugs, wie beispielsweise Mähdrescher 1 oder Feldhäcksler oder Traktor, mit wenigstens einer Einrichtungen zur Erfassung von Betriebswerten und/ oder Arbeitsergebnissen und wenigstens einer Rechen-, Speicher- und Anzeigeeinrichtung, wobei auf dem Fahrzeug unter Berücksichtigung wenigstens eines momentanen, ermittelten und in der Speichereinrichtung hinterlegten Parameters, zumindest ein ökonomischer Betriebswert für das Fahrzeug berechnet und dem Bediener des Fahrzeugs angezeigt und/oder von einer weiteren Einrichtung des Fahrzeugs berücksichtigt wird, wobei der ökonomische Betriebswert ein Optimum zwischen der Erlös bringenden Fahrzeugleistung und den Erlös mindernden Kosten des momentanen Erntebetriebes anzeigt, wobei der ökonomische Betriebswert direkt mit den aktuellen Betriebsbedingungen des Fahrzeugs in Verbindung steht, **dadurch gekennzeichnet, dass** aus dem Erntegutdurchsatz und dem Erntegutverlust in Verbindung mit dem Ernteguterlös und wenigstens einer Betriebskennlinie ein ökonomischer Erntegutverlustpunkt berechnet wird.

2. Verfahren nach Anspruch 1,
**dadurch gekennzeichnet, dass**
der ökonomische Betriebswert zunächst optimiert und dann als ein ökonomischer Betriebspunkt angezeigt und/oder von einer weiteren Einrichtung des Fahrzeugs berücksichtigt wird.

3. Verfahren nach wenigstens einem der Ansprüche 1 oder 2,
**dadurch gekennzeichnet, dass**
ökonomischer Betriebswert der von einer auf einem als Computer ausgebildeten Recheneinrichtung 2 laufenden Optimierungssoftware generiert wird.

4. Verfahren nach wenigstens einem der Ansprüche 1 bis 3,
**dadurch gekennzeichnet, dass**
bei der Berechnung zusätzlich wenigstens ein Arbeitsergebnis berücksichtigt wird.

5. Verfahren nach wenigstens einem der Ansprüche 1 bis 4,
**dadurch gekennzeichnet, dass**
der Parameter ein Betriebswert ist, welcher fixe und/oder variable Fahrzeugkosten und/oder Arbeitskraftkosten und/oder den Ernteguterlös und/oder Ernte- oder Erntegutnachbearbeitungskosten und/oder wenigstens eine Betriebskennlinie und/oder Ernteanforderungen beinhaltet.

6. Verfahren nach wenigstens einem der Ansprüche 1 bis 5,
**dadurch gekennzeichnet, dass**
der Parameter ein Arbeitsparameter ist, welcher wenigstens einen Einstellwert eines Fahrzeugs und/oder die Arbeitsbreite und/oder die Fahrgeschwindigkeit und/oder wenigstens ein Verbrauchs- und/oder Verschleiß- und/oder Leistungs- und/oder Drehmoment- und/oder Drehzahlwert wenigstens eines Fahrzeugsaggregates 7,10,11,12,13,14,15 beinhaltet.

7. Verfahren nach wenigstens einem der Ansprüche 1 bis 6,
**dadurch gekennzeichnet, dass**
der Parameter eine Emtebedingung ist, welche die Erntegutart und/oder die Emtgutfeuchte und/oder die Strohfeuchte und/oder die Umgebungsluftfeuchte und/oder die Tageszeit und/oder der Reifegrad und/oder die geografische Lage beinhaltet.

8. Verfahren nach wenigstens einem der Ansprüche 1 bis 7,
**dadurch gekennzeichnet, dass**
das Arbeitsergebnis der Gutdurchsatz und/oder der Erntegutdurchsatz und/oder die Erntegutabscheidung im Mähdrescher 1 und/oder den Erntegutverlust und/oder die Erntegutstruktur und/oder die Erntegutsauberkeit und/oder der Ertrag ist.

9. Verfahren nach wenigstens einem der Ansprüche 1 bis 8,
**dadurch gekennzeichnet, dass**
als ein ökonomischer Betriebswert, ein ökonomischer Erntegutdurchsatz und/oder wenigstens ein ökonomischer Erntegutverlust und/oder eine ökonomische Flächenleistung berechnet wird.

10. Optimierungseinrichtung an selbstfahrenden landwirtschaftlichen Fahrzeugen, wie Mähdrescher 1, Feldhäcksler und Traktoren, mit wenigstens einer Einrichtung (5) zur Erfassung von mindestens einem Betriebswert und/oder Arbeitsergebnis und mit wenigstens einer Rechen-, Speicher-, Anzeigeeinrichtung (2), wobei die Recheneinrichtung (2) anhand von wenigstens einem in der Speichereinrichtung hinterlegten Parameter und aus wenigstens einem Ergebnis des momentanen Arbeits- und/ oder Erntebetriebs wenigstens einen ökonomischen Betriebswert für das Fahrzeug ermittelt und auf einer Anzeigeeinrichtung (3) darstellt und/oder von einer weiteren Einrichtung des Fahrzeugs berücksichtigt wird, wobei der ökonomische Betriebswert ein Optimum zwischen der Erlös bringenden Fahrzeugleistung und den Erlös mindernden Kosten des momentanen Erntebetriebes anzeigt, wobei der ökonomische Betriebswert direkt mit den aktuellen Betriebsbedingungen des Fahrzeugs in Verbindung steht, **dadurch gekennzeichnet, dass** aus dem Erntegutdurchsatz und dem Erntegutverlust in Verbindung mit dem Ernteguterlös und wenigstens einer Betriebskennlinie ein ökonomischer Erntegutverlustpunkt berechnet wird.

11. Optimierungseinrichtung nach Anspruch 10,
**dadurch gekennzeichnet, dass**
die Recheneinrichtung 2 von einem Computer gebildet wird, der mit dem Fahrzeug über wenigstens eine Schnittstelle Daten austauscht.

## Claims

1. A method of optimising the operation of a self-propelled agricultural vehicle such as for example a combine harvester (1) or forage harvester or tractor comprising at least one device for detecting operating values and/or working results and at least one computing, storage and display device, wherein at least one economic operating value for the vehicle is calculated on the vehicle having regard to at least one current ascertained parameter which is stored in the storage device and is displayed to the operator of the vehicle and/or is taken into consideration by a further device of the vehicle, wherein the economic operating value displays an optimum between the yield-producing vehicle performance and the yield-reducing costs of the current harvesting operation, wherein the economic operating value is directly related to the current operating conditions of the vehicle, **characterised in that** an economic crop material loss point is computed from the crop material through-put and the crop material loss in conjunction with the crop material yield and at least one operating characteristic .

2. A method according to claim 1 **characterised in that** the economic operating value and/or economic working parameter are firstly optimised and then displayed as an economic operating point and/or economic working parameter and/or taken into consideration by a further device of the vehicle.

3. A method according to at least one of claims 1 and 2 **characterised in that** an economic operating value and/or economic operating point and/or working parameter is generated by an optimisation software running on a computing device (2) in the form of a computer.

4. A method according to at least one of claims 1 to 3 **characterised in that** in the computing operation in addition at least one working result is taken into consideration.

5. A method according to at least one of claims 1 to 4 **characterised in that** the parameter is an operating value which includes fixed and/or variable vehicle costs and/or workforce costs and/or the crop material yield and/or harvesting or crop material post-processing costs and/or at least one operating characteristic and/or harvesting requirements.

6. A method according to at least one of claims 1 to 5 **characterised in that** the parameter is a working parameter which includes at least one adjusting value of a vehicle and/or the working width and/or the travel speed and/or at least one consumption and/or wear and/or power output and/or torque and/or rotary speed value of at least one vehicle assembly 7, 10, 11, 12, 13, 14, 15.

7. A method according to at least one of claims 1 to 6 **characterised in that** the parameter is a harvesting condition which involves the crop material type and/or the crop material moisture content and/or the straw moisture content and/or the ambient air moisture content and/or the time of day and/or the degree of ripeness and/or the geographical location.

8. A method according to at least one of claims 1 to 7 **characterised in that** the working result is the material through-put and/or the crop material through-put and/or the crop material deposit in the combine harvester 1 and/or the crop material loss and/or the crop material structure and/or the crop material cleanliness and/or the yield.

9. A method according to at least one of claims 1 to 8 **characterised in that** an economic crop material through-put and/or at least one economic crop material loss and/or an economic production in relation to surface area is computed as an economic operating value.

10. An optimisation apparatus on self-propelled agricultural vehicles such as for example combine harvesters (1) or forage harvesters or tractors comprising at least one device (5) for detecting at least one operating value and/or working result and at least one computing, storage and display device (2), wherein the computing device (2) ascertains at least one economic operating value for the vehicle on the basis of at least one parameter stored in the storage device and from at least one result of the current working and/or harvesting operation, and represents same on a display device (3) and/or is taken into consideration by a further device of the vehicle, wherein the economic operating value displays an optimum between the yield-producing vehicle performance and the yield-reducing costs of the current harvesting operation, wherein the economic operating value is directly related to the current operating conditions of the vehicle, **characterised in that** an economic crop material loss point is computed from the crop material through-put and the crop material loss in conjunction with the crop material yield and at least one operating characteristic .

11. An optimisation apparatus according to claim 10 **characterised in that** the computing device (2) is formed by a computer which exchanges data with the vehicle by way of at least one interface.

## Revendications

1. Procédé d'optimisation du fonctionnement d'un véhicule agricole automoteur, comme par exemple une moissonneuse-batteuse (1)_{,} une ensileuse ou un tracteur, comportant au moins un dispositif de mesure de grandeurs de fonctionnement et/ou de résultats de travail ainsi qu'au moins un dispositif de calcul, de mémorisation et d'affichage, au moins une grandeur de fonctionnement économique pour le véhicule étant calculée sur le véhicule, en prenant en compte au moins un paramètre momentané mesuré et mémorisé dans le dispositif de mémorisation, et affichée à l'attention de l'utilisateur du véhicule et/ou prise en compte dans un autre du dispositif du véhicule, la grandeur de fonctionnement économique représentant un optimum entre la puissance rentable du véhicule et le coût réducteur de rentabilité du fonctionnement de récolte momentané et la grandeur de fonctionnement économique étant en relation directe avec les conditions de fonctionnement actuelles du véhicule, **caractérisé par le fait qu'**à partir du débit de produit de récolte et de la perte en produit de récolte en liaison avec le rapport du produit de récolte et au moins une courbe caractéristique de fonctionnement, on calcule un point de perte en produit de récolte économique.

2. Procédé selon la revendication 1, **caractérisé par le fait que** la grandeur de fonctionnement économique est d'abord optimisée puis est affichée en tant que point de fonctionnement économique et/ou est prise en compte dans un autre dispositif du véhicule.

3. Procédé selon la revendication 1 ou 2, **caractérisé par le fait que** la grandeur de fonctionnement économique est générée par un logiciel d'optimisation déployé dans un dispositif de calcul (2) qui se présente sous la forme d'un ordinateur.

4. Procédé selon au moins une des revendications 1 à 3, **caractérisé par le fait qu'**au moins un résultat de travail est également pris en compte dans le calcul.

5. Procédé selon au moins une des revendications 1 à 4, **caractérisé par le fait que** le paramètre est une grandeur de fonctionnement qui contient des coûts de véhicule et/ou des coûts de main d'oeuvre fixes et/ou variables, et/ou le gain procuré par le produit de récolte et/ou des coûts de traitement de la récolte ou du produit de récolte et/ou au moins une courbe de fonctionnement et/ou des exigences de récolte.

6. Procédé selon au moins une des revendications 1 à 5, **caractérisé par le fait que** le paramètre est un paramètre de travail qui contient au moins une valeur de réglage d'un véhicule et/ou la largeur de travail et/ou la vitesse de déplacement et/ou au moins une valeur de consommation et/ou d'usure et/ou de puissance et/ou de couple et/ou de vitesse de rotation d'au moins un module (7, 10, 11, 12, 13, 14, 15) du véhicule.

7. Procédé selon au moins une des revendications 1 à 6, **caractérisé par le fait que** le paramètre est une condition de récolte qui contient la nature du produit de récolte et/ou l'humidité du produit de récolte et/ou l'humidité de la paille et/ou l'humidité de l'air ambiant et/ou l'heure de la journée et/ou le degré de maturité et/ou la situation géographique.

8. Procédé selon au moins une des revendications 1 7, **caractérisé par le fait que** le résultat de travail est le débit de produit et/ou le débit de produit de récolte et/ou la séparation du produit de récolte dans la moissonneuse-batteuse (1) et/ou la perte en produit de récolte et/ou la structure du produit de récolte et/ou la propreté du produit de récolte et/ou le rendement.

9. Procédé selon au moins une des revendications 1 à 8, **caractérisé par le fait qu'**on calcule comme grandeur de fonctionnement économique, un débit de produit de récolte économique et/ou au moins une perte en produit de récolte économique et/ou une performance par unité de surface économique.

10. Dispositif d'optimisation du fonctionnement d'un véhicule agricole automoteur, comme par exemple une moissonneuse-batteuse (1), une ensileuse ou un tracteur, comportant au moins un dispositif (5) de mesure d'au moins une grandeur de fonctionnement et/ou un résultat de travail ainsi qu'au moins un dispositif de calcul, de mémorisation et d'affichage (2), le dispositif de calcul (2), sur la base d'au moins un paramètre mémorisé dans le dispositif de mémorisation et à partir d'au moins un résultat du fonctionnement momentané de travail et/ou de récolte déterminant au moins une grandeur de fonctionnement économique pour le véhicule et l'affichant sur un dispositif d'affichage (3) et/ou celle-ci étant pris en compte dans un autre du dispositif du véhicule, la grandeur de fonctionnement économique représentant un optimum entre la puissance rentable du véhicule et le coût réducteur de rentabilité du fonctionnement de récolte momentané, la grandeur de fonctionnement économique étant en relation directe avec les conditions de fonctionnement actuelles du véhicule, **caractérisé par le fait qu'**à partir du débit de produit de récolte et de la perte en produit de récolte en liaison avec le rapport du produit de récolte et au moins une courbe caractéristique de fonctionnement, on calcule un point de perte en produit de récolte économique.

11. Dispositif d'optimisation selon la revendication 11, **caractérisé par le fait que** le dispositif de calcul est formé d'un ordinateur qui échange des données avec le véhicule par l'intermédiaire d'au moins une interface.
